# EUROPEAN PATENT APPLICATION

(11) **EP 4 618 584 A1**
(43) Date of publication of application: **17.09.2025**
(21) Application number: 23910004.3
(22) Date of filing: 06.12.2023
(51) Int. Cl.: H04Q 11/00

(54) **MAPPING AND DEMAPPING METHOD FOR TRANSMISSION FRAME, AND RELATED DEVICE**

(30) Priority: 26.12.2022 CN 202211674929; 15.03.2023 CN 202310288308
(71) Applicant: Huawei Technologies Co., Ltd., Shenzhen, Guangdong 518129 (CN)
(72) Inventor: SU, Wei, Shenzhen, Guangdong 518129 (CN)
(74) Representative: Huawei European IPR
(86) International application number: PCT/CN2023/136669
(87) International publication number: WO 2024/140074

(57) **Abstract**

Embodiments of this application disclose a transmission frame mapping and demapping method and a related device. The method in embodiments of this application includes the following steps: first, obtaining a plurality of first code block streams, where the plurality of first code block streams belong to a same service, and each of the plurality of first code block streams includes a plurality of code blocks, then, performing code block-based interleaving on the plurality of first code block streams, to obtain a second code block stream; next, mapping the second code block stream to a transmission frame, and inserting indication information into the transmission frame, where the indication information is used to determine a location of the second code block stream in the transmission frame; and further, sending the transmission frame. In this application, code block-based interleaving is performed sequentially on a plurality of code block streams, and then a code block stream obtained through interleaving is mapped to the transmission frame. Compared with a manner in which the code block streams are respectively mapped, a solution provided in this application simplifies the mapping manner.

## Description

This application claims priorities to Chinese Patent Application No. CN202211674929.3, filed with the China National Intellectual Property Administration on December 26, 2022 and entitled "TRANSMISSION FRAME MAPPING AND DEMAPPING METHOD AND RELATED DEVICE", and to Chinese Patent Application No. CN202310288308.X, filed with the China National Intellectual Property Administration on March 15, 2023 and entitled "TRANSMISSION FRAME MAPPING AND DEMAPPING METHOD AND RELATED DEVICE", both of which are incorporated herein by reference in their entireties.

### TECHNICAL FIELD

This application relates to the field of optical communication, and in particular, to a transmission frame mapping and demapping method and a related device.

### BACKGROUND

An optical transport network (Optical Transport Network, OTN) has become a mainstream technology for a transport network by virtue of high bandwidth, a large capacity, high reliability, low latency, and other features and is widely used in backbone, metropolitan core, aggregation, and other networks.

The Institute of Electrical and Electronics Engineers (Institute of Electrical and Electronics Engineers, IEEE) 802.3 preliminarily defines an 800GE physical coding sublayer (Physical Coding Sublayer, PCS), performs appropriate optimization on a 2*400GE PCS structure proposed by the Ethernet Alliance for 4:1 bit multiplexing from the PCS to a physical medium attachment (Physical Medium Attachment, PMA) sublayer, so as to allow multiplexing of two 400G data streams. Currently, there is no mapping method designed for an 800GE service in the industry. However, in a conventional mapping method for a 400GE service, mapping is performed based on a 66-bit code block stream, and the mapping processing process is complex.

### SUMMARY

Embodiments of this application provide a transmission frame mapping and demapping method and a related device. Code block-based interleaving is performed sequentially on a plurality of code block streams, and then a code block stream obtained through interleaving is mapped to a transmission frame. Compared with a manner in which the code block streams are respectively mapped, a solution provided in this application simplifies the mapping manner.

According to a first aspect, an embodiment of this application provides a transmission frame mapping method: first, obtaining a plurality of first code block streams, where the plurality of first code block streams belong to a same service, and each of the plurality of first code block streams includes a plurality of code blocks; then, performing code block-based interleaving on the plurality of first code block streams, to obtain a second code block stream; next, mapping the second code block stream to a transmission frame, and inserting indication information into the transmission frame, where the indication information is used to determine a location of the second code block stream in the transmission frame; and further, sending the transmission frame.

In this implementation, code block-based interleaving is performed sequentially on a plurality of code block streams, and then a code block stream obtained through interleaving is mapped to the transmission frame. Compared with a manner in which the code block streams are respectively mapped, a solution provided in this application simplifies the mapping manner. In addition, the transmission frame carries the indication information that may indicate a location of a code block in the transmission frame, so that the location of the code block can be quickly identified when the transmission frame is demapped.

In some possible implementations, a size of the code block in the first code block stream is 257 bits. In other words, a 257b block stream is used in this application. Different from a 66b block stream, the 257b block stream has higher carrying efficiency. In addition, first two bits in a 66b code block are synchronization headers, that is, each 66b code block needs to be subject to synchronous processing. Processing complexity is high. However, in this application, the indication information is inserted into the transmission frame, and the location of the code block in the transmission frame can be determined based on the indication information. This avoids complex synchronous processing on code blocks.

In some possible implementations, the mapping method further includes: performing synchronous processing on the plurality of first code block streams, to keep the plurality of first code block streams aligned.

In some possible implementations, the inserting indication information into the transmission frame includes: inserting the indication information into an overhead area of the transmission frame. It should be understood that the indication information inserted into the overhead area may also be referred to as a "block boundary indication (block boundary Indication)", and a location or a boundary of a code block in a payload area may be directly determined based on the indication information. In this way, the entire payload area may be used to carry a code block in the second code block stream, so that the transmission frame can carry as many code blocks as possible.

In some possible implementations, the transmission frame is an optical data unit (Optical Data Unit, ODU) frame, and the inserting the indication information into an overhead area of the transmission frame includes: inserting the indication information into a 15^{th} column and a 16^{th} column from a 1^{s1} row to a 3^{rd} row, or a 15^{th} column and a 16^{th} column of a 4^{th} row in the overhead area.

In some possible implementations, the inserting indication information into the transmission frame includes: inserting the indication information into a payload area of the transmission frame, where a quantity of code blocks carried in the payload area is an integer. It should be understood that the payload area carries an integer quantity of code blocks, and the indication information of fixed bits is inserted into the payload area. Therefore, the location of the code block may be indirectly determined based on determining a frame boundary and with reference to an insertion location of the indication information. This extends the implementation of this application.

In some possible implementations, the transmission frame is an ODU frame, a size of the indication information is 38 bits, and the payload area carries 474 257-bit code blocks.

In some possible implementations, the method further includes: checking the code block in the transmission frame to obtain check information, and inserting the check information into the payload area. It should be understood that the check information may be used to protect valid data carried in the payload area, to improve transmission reliability.

In some possible implementations, the transmission frame is an ODU frame, and the payload area carries 474 257-bit code blocks. The indication information includes 3-bit first indication information and 3-bit second indication information. The checking the code block in the transmission frame to obtain check information includes: checking a code block carried in a 1^{st} row and a 2^{nd} row in the payload area to obtain first cyclic redundancy check-16 (Cyclic Redundancy Check, CRC-16), and checking a code block carried in a 3^{rd} row and a 4^{th} row in the payload area to obtain second CRC-16.

In some possible implementations, the inserting indication information into the transmission frame includes: inserting the indication information into an overhead area of the transmission frame. The method further includes: checking the code block in the transmission frame to obtain check information, and inserting the check information into the payload area, where a quantity of code blocks carried in the overhead area and a quantity of code blocks carried in the payload area are integers. In this implementation, because the check information is inserted into the payload area, the payload area has insufficient space to carry an integer quantity of code blocks. Therefore, some space of the overhead area is borrowed to jointly carry the code block, to improve flexibility of this solution.

In some possible implementations, the transmission frame is an ODU frame, and a 16^{th} column of the overhead area and the payload area carry 474 257-bit code blocks. The indication information includes 3-bit first indication information and 3-bit second indication information. The checking the code block in the transmission frame to obtain check information includes: checking a code block carried in each row of the payload area and the overhead area to obtain corresponding CRC-16. In this implementation, a code block in each row is checked, to reduce cache and latency.

In some possible implementations, the mapping the second code block stream to a transmission frame includes: mapping the second code block stream to the transmission frame by using a bit-synchronous mapping procedure (Bit-synchronous mapping procedure, BMP). In other words, the mapping method provided in this application may adapt to a constant bit rate (Constant Bit Rate, CBR) bearer.

In some possible implementations, the obtaining a plurality of first code block streams includes: obtaining a third code block stream, where a size of a code block in the third code block stream is 257 bits; transcoding the third code block stream to obtain a fourth code block stream, where a size of a code block in the fourth code block stream is 66 bits; performing rate match on the fourth code block stream to obtain a fifth code block stream; distributing the fifth code block stream to obtain a plurality of sixth code block streams; and transcoding the plurality of sixth code block streams to obtain the plurality of first code block streams. In other words, the mapping method provided in this application may adapt to a packet (Packet, PKT) bearer.

In some possible implementations, a rate of the service is 800 GE or 1.6 TE.

According to a second aspect, an embodiment of this application provides a transmission frame mapping method: first, obtaining a code block stream; then, mapping the code block stream to a transmission frame, and inserting indication information into the transmission frame, where the indication information is used to determine a location of the code block stream in the transmission frame, and the transmission frame sequentially includes, starting from a start location, a first overhead area, a first payload area, a second overhead area, and a second payload area; and further, sending the transmission frame.

In this implementation, the transmission frame includes two overhead areas. This is equivalent to extending the overhead area, to accelerate a transmission rate of overhead information, and improve performance. In addition, the indication information is inserted into the transmission frame, and a location of a code block in the transmission frame may be determined based on the indication information. In this way, the location of the code block can be quickly identified when the transmission frame is demapped, to avoid complex synchronous processing on code blocks.

In some possible implementations, a size of the code block in the code block stream is 66 bits or 257 bits.

In some possible implementations, a transmission frame includes four rows and 3824 columns of bytes. An area from a 1^{st} column to a 16^{th} column in the transmission frame is the first overhead area, an area from a 17^{th} column to a 1904^{th} column in the transmission frame is the first payload area, an area from a 1905^{th} column to a 1920^{th} column in the transmission frame is the second overhead area, and an area from a 1921^{st} column to a 3824^{th} column in the transmission frame is the second payload area.

In some possible implementations, the inserting indication information into the transmission frame includes: inserting the indication information into the first overhead area and/or the second overhead area. In this way, both the first payload area and the second payload area may be used to carry the code block in the code block stream, so that the transmission frame can carry as many code blocks as possible.

In some possible implementations, the inserting the indication information into the first overhead area includes: inserting the indication information into a 15^{th} column and/or a 16^{th} column of a 1^{st} row to a 3^{rd} row in the first overhead area.

In some possible implementations, the indication information includes three pieces of indication sub-information, and the three pieces of indication sub-information have a same value. The inserting the indication information into a 15^{th} column and/or a 16^{th} column of a 1^{st} row to a 3^{rd} row in the first overhead area includes: inserting the three pieces of indication sub-information into the 15^{th} column of the 1^{st} row to the 3^{rd} row in the first overhead area; inserting the three pieces of indication sub-information into the 16^{th} column of the 1^{st} row to the 3^{rd} row in the first overhead area; or inserting the three pieces of indication sub-information into the 15^{th} column and the 16^{th} column of the 1^{st} row to the 3^{rd} row in the first overhead area. In this implementation, all the three pieces of indication sub-information indicate a location of a code block. A receiving end may receive the three pieces of indication sub-information. Even if a transmission error occurs in one piece of indication sub-information, valid indication sub-information may be determined through majority voting, so that an accurate location of the code block can be determined.

In some possible implementations, there are a plurality of transmission frames, and every N consecutive transmission frames form one group. Values of N pieces of indication information of N transmission frames in each group increase in ascending order. Values of N pieces of indication information of N transmission frames in any group are the same as values of N pieces of indication information of N transmission frames in any other group. N is an integer greater than 1.

In some possible implementations, the indication information includes four pieces of indication sub-information, and values of the four pieces of indication sub-information increase in ascending order. The inserting the indication information into the first overhead area or the second overhead area includes: sequentially inserting the four pieces of indication sub-information into a 1^{st} row to a 4^{th} row of the first overhead area or a 1^{st} row to a 4^{th} row of the second overhead area in ascending order of the values.

In some possible implementations, the inserting indication information into the transmission frame includes: inserting the indication information into the second payload area, where a quantity of code blocks carried in the first payload area and a quantity of code blocks carried in the second payload area are integers. It should be understood that the first payload area and the second payload area carry an integer quantity of code blocks, and the indication information of fixed bits is inserted into the second payload area. Therefore, the location of the code block may be indirectly determined based on determining a frame boundary and with reference to an insertion location of the indication information. This extends the implementation of this application.

In some possible implementations, the method further includes: checking the code block in the transmission frame to obtain check information, and inserting the check information into the second payload area. It should be understood that the check information may be used to protect valid data carried in the payload area, to improve transmission reliability.

According to a third aspect, an embodiment of this application provides a transmission frame demapping method: first, receiving a transmission frame, where the transmission frame carries a second code block stream and indication information, the indication information is used to determine a location of the second code block stream in the transmission frame, the second code block stream is obtained by performing code block-based interleaving on a plurality of first code block streams, the plurality of first code block streams belong to a same service, and each of the plurality of first code block streams includes a plurality of code blocks; and further, demapping a code block in the transmission frame to obtain the second code block stream.

In some possible implementations, the method further includes: distributing the second code block stream to obtain the plurality of first code block streams.

In some possible implementations, the method further includes: transcoding the plurality of first code block streams to obtain a plurality of third code block streams, where a size of the code block in the first code block stream is 257 bits, and a size of a code block in the third code block stream is 66 bits; collecting the plurality of third code block streams to obtain a fourth code block stream; performing rate match on the fourth code block stream to obtain a fifth code block stream; distributing the fifth code block stream to obtain a plurality of sixth code block streams; and transcoding the sixth code block streams to obtain a plurality of seventh code block streams, where a size of a code block in the seventh code block stream is 257 bits.

According to a fourth aspect, an embodiment of this application provides a transmission frame demapping method: first, receiving a transmission frame, where the transmission frame carries a code block stream and indication information, the indication information is used to determine a location of the code block stream in the transmission frame, and the transmission frame sequentially includes, starting from a start location, a first overhead area, a first payload area, a second overhead area, and a second payload area; and further, demapping a code block in the transmission frame to obtain the code block stream.

According to a fifth aspect, an embodiment of this application provides a transmitting device. The transmitting device includes a processor and a transceiver. The processor is configured to control the transceiver to receive and send a signal. The processor is specifically configured to perform the method described in any one of the implementations of the first aspect or the second aspect.

According to a sixth aspect, an embodiment of this application provides a receiving device. The receiving device includes a processor and a transceiver. The processor is configured to control the transceiver to receive and send a signal. The processor is specifically configured to perform the method described in any one of the implementations of the third aspect or the fourth aspect.

According to a seventh aspect, an embodiment of the present invention provides a digital processing chip. The digital processing chip includes a processor and a memory. The memory and the processor are interconnected through a line. The memory stores instructions. The processor is configured to perform the method described in any one of the implementations of the first aspect to the fourth aspect.

In embodiments of this application, code block-based interleaving is performed sequentially on a plurality of code block streams, and then a code block stream obtained through interleaving is mapped to a transmission frame. Compared with a manner in which the code block streams are respectively mapped, a solution provided in this application simplifies the mapping manner. In addition, the transmission frame carries the indication information that may indicate the location of the code block in the transmission frame, so that the location of the code block can be quickly identified when the transmission frame is demapped.

### BRIEF DESCRIPTION OF DRAWINGS

FIG. 1 is a schematic structural diagram of hardware in an OTN device;
FIG. 2 is a schematic diagram of an embodiment of a transmission frame mapping method according to an embodiment of this application;
FIG. 3 is a schematic diagram of an implementation of performing code block-based interleaving on a plurality of first code block streams according to an embodiment of this application;
FIG. 4 is a schematic diagram of an application scenario of a transmission frame mapping method according to an embodiment of this application;
FIG. 5 is a first schematic structural diagram of a transmission frame according to an embodiment of this application;
FIG. 6 is a second schematic structural diagram of a transmission frame according to an embodiment of this application;
FIG. 7 is a third schematic structural diagram of a transmission frame according to an embodiment of this application;
FIG. 8 is a fourth schematic structural diagram of a transmission frame according to an embodiment of this application;
FIG. 9 is a schematic diagram of an embodiment of a transmission frame mapping method according to an embodiment of this application;
FIG. 10 is a schematic diagram of an application scenario of a transmission frame demapping method according to an embodiment of this application;
FIG. 11 is a schematic diagram of an embodiment of another transmission frame mapping method according to an embodiment of this application;
FIG. 12 is a fifth schematic structural diagram of a transmission frame according to an embodiment of this application;
FIG. 13 is a sixth schematic structural diagram of a transmission frame according to an embodiment of this application;
FIG. 14 is a seventh schematic structural diagram of a transmission frame according to an embodiment of this application;
FIG. 15 is an eighth schematic structural diagram of a transmission frame according to an embodiment of this application;
FIG. 16 is a ninth schematic structural diagram of a transmission frame according to an embodiment of this application;
FIG. 17 is a possible schematic structural diagram of a transmitting device; and
FIG. 18 is a possible schematic structural diagram of a receiving device.

### DESCRIPTION OF EMBODIMENTS

Embodiments of this application provide a transmission frame mapping and demapping method and a related device. Code block-based interleaving is performed sequentially on a plurality of code block streams, and then a code block stream obtained through interleaving is mapped to a transmission frame. Compared with a manner in which the code block streams are respectively mapped, a solution provided in this application simplifies the mapping manner.

It should be noted that, the terms "first", "second", and the like in the specification, claims, and the accompanying drawings of this application are intended to distinguish between similar objects, but do not limit a specific order or sequence. It should be understood that the foregoing terms may be interchanged in proper cases, so that embodiments described in this application can be implemented in an order other than the content described in this application. Further, the term "include", and any variations thereof, are intended to cover non-exclusive inclusions. For example, a process, method, system, product, or device that includes a list of steps or units is not necessarily limited to those expressly listed steps or units, but may include other steps or units not expressly listed or inherent to the process, method, product, or device.

Embodiments of this application are applicable to an optical network, for example, an optical transport network (Optical transport Network, OTN). An optical network generally includes a plurality of OTN devices connected through optical fibers, and different topology types such as a linear topology, a ring topology, or a mesh topology may be formed based on specific requirements.

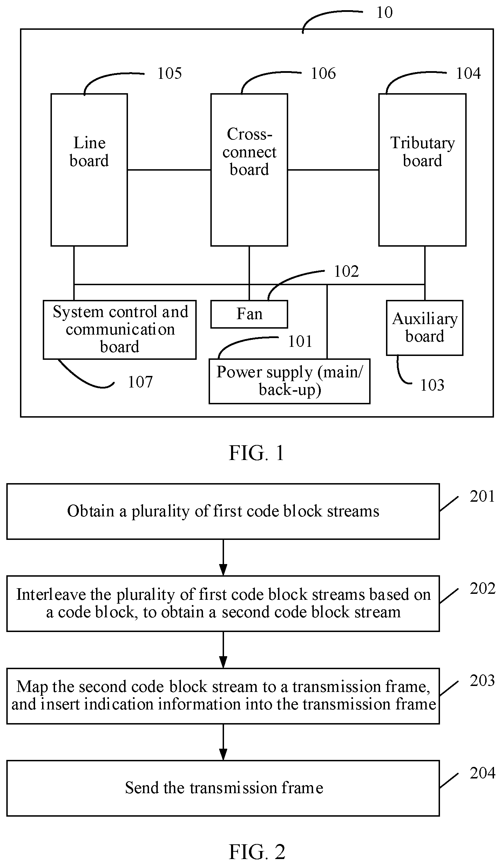

FIG. 1 is a schematic structural diagram of hardware in an OTN device. Specifically, the device 10 includes a power supply 101, a fan 102, and an auxiliary board 103, and may further include a tributary board 104, a line board 105, a cross-connect board 106, an optical processing board (not shown in the figure), and a system control and communication board 107. It should be noted that, types and a quantity of boards specifically included in one device 10 may vary with a specific requirement. For example, a network device acting as a core node may have no tributary board 104. A network device acting as an edge node may have a plurality of tributary boards 104. The power supply 101 is configured to supply power to the device, and may include a main power supply and a back-up power supply. The fan 102 is configured to dissipate heat for the device. The auxiliary board 103 is configured to provide an auxiliary function, for example, provide an external alarm or access an external clock. The tributary board 104, the cross-connect board 106, and the line board 105 are mainly configured to process an electrical-layer signal of an optical network, for example, a transmission frame in the OTN. The tributary board 104 is configured to receive and send various client services, for example, a synchronous digital hierarchy (Synchronous Digital Hierarchy, SDH) service, a packet service, an Ethernet service, a fronthaul service, and the like. Further, the tributary board 104 may be divided into a client-side optical module and a processor. The client-side optical module may be an optical transceiver, and is configured to receive and/or send a client signal. The processor is configured to implement mapping and demapping processing from the client signal to the transmission frame. The cross-connect board 106 is configured to exchange transmission frames, to complete exchanging of one or more types of transmission frames. The line board 105 mainly processes a line-side transmission frame. Specifically, the line board 105 may be divided into a line-side optical module and a processor. The line-side optical module may be a line-side optical transceiver, and is configured to receive and/or send the transmission frame. The processor is configured to implement multiplexing and demultiplexing or mapping and demapping processing on the line-side transmission frame. The system control and communication board 107 is configured to implement system control and communication. Specifically, the system control and communication board may collect information from different boards using a backplane or send a control instruction to a corresponding board. It should be noted that, unless otherwise specified, there may be one or more specific components (for example, a processor). This is not limited in this application. It should be further noted that, a type of a board included in the device, a specific function design of the board, and a quantity of boards are not limited in embodiments of this application. It should be noted that the transmission frame mapping method in this application may be specifically implemented on the line board 105. Alternatively, the tributary board 104 and the line board 105 may be integrated to implement the transmission frame mapping method in this application.

It should be noted that a specific type of the transmission frame is not limited in this application. For example, the transmission frame may be an optical payload unit-k (Optical Payload Unit-k, OPUk) frame, an optical data unit-k (Optical Data Unit-k, ODUk) frame, an optical transport unit-k (Optical Transport Unit-k, OTUk) frame, or the like. For ease of description, the following uses an example in which the transmission frame is an ODUk frame for description.

FIG. 2 is a schematic diagram of an embodiment of a transmission frame mapping method according to an embodiment of this application. In this example, the transmission frame mapping method includes the following steps.

201: Obtain a plurality of first code block streams.

In this embodiment, the plurality of first code block streams belong to a same service, and each first code block stream includes a plurality of code blocks. For example, if a rate of the service is 800 GE, that is, if an 800GE PCS layer includes two 400GE PCS structures, two first code block streams are obtained. For another example, if a rate of the service is 1.6 TE, that is, if a 1.6TE PCS layer includes four 400GE PCS structures, four first code block streams are obtained.

202: Perform code block-based interleaving on the plurality of first code block streams, to obtain a second code block stream.

Code block-based interleaving is performed sequentially on the plurality of first code block streams to obtain a code block stream obtained through interleaving, that is, the second code block stream. In some possible implementations, before code block-based interleaving is performed on the plurality of first code block streams, synchronous processing further needs to be performed on the plurality of first code block streams, so that the plurality of first code block streams are aligned.

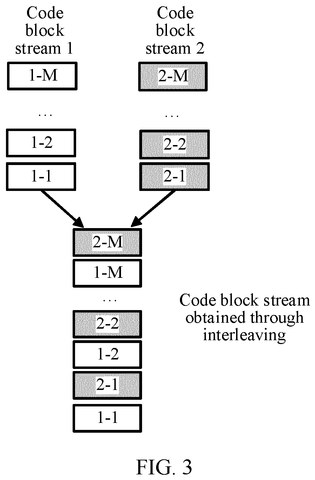

FIG. 3 is a schematic diagram of an implementation of performing code block-based interleaving on a plurality of first code block streams according to an embodiment of this application. As shown in FIG. 3, two first code block streams are used as an example, which are denoted as a code block stream 1 and a code block stream 2. Code blocks in the code block stream 1 are sequentially denoted as a code block 1-1, a code block 1-2, ..., and a code block 1-M. Code blocks in the code block stream 2 are sequentially denoted as a code block 2-1, a code block 2-2, ..., and a code block 2-M. It can be learned that code blocks in a code block stream obtained through interleaving are sequentially the code block 1-1, the code block 2-1, the code block 1-2, the code block 2-2, ..., the code block 1-M, and the code block 2-M.

203: Map the second code block stream to the transmission frame, and insert indication information into the transmission frame.

Specifically, code blocks in the second code block stream are sequentially mapped to the transmission frame. The code block is usually mapped to a payload area of the transmission frame. In some possible implementations, if the payload area is insufficient to carry a specified quantity of code blocks, some code blocks may be mapped to an overhead area of the transmission frame. Details are described below with reference to specific embodiments. It should be understood that the indication information is used to determine a location of a code block mapped to the transmission frame. For example, the indication information may be inserted into the overhead area of the transmission frame. For another example, the indication information may alternatively be inserted into the payload area of the transmission frame. Details are separately described below with reference to specific embodiments.

It should be noted that a frame mapping manner used in this application may be a bit-synchronous mapping procedure (Bit-synchronous mapping procedure, BMP), a generic mapping procedure (Generic Mapping Procedure, GMP), an idle mapping procedure (Idle mapping Procedure, IMP), a generic framing procedure (Generic Framing Procedure, GFP), or the like. This is not specifically limited herein.

It should be further noted that, for a scenario in which the rate of the service is 1.6 TE, an implementation in which interleaving is first performed on four first code block streams and then mapping is performed may be used. Alternatively, the four first code block streams may be first divided into two groups each including two first code block streams, and interleaving is first performed and on the two first code block streams in each group and then mapping is performed.

In a possible implementation, a size of the code block in the first code block stream is 257 bits, and the first code block stream may also be referred to as a "257b block stream" or a "257B block stream". It should be understood that, different from a 66b block stream with a code block size of 66 bits, the 257b block stream has higher bearing efficiency. In addition, first two bits in a 66b code block are synchronization headers, that is, all 66b code blocks need to be subject to synchronous processing. Processing complexity is high. However, in this application, the indication information is inserted into the transmission frame, and the location of the code block in the transmission frame can be determined based on the indication information. This avoids complex synchronous processing on code blocks.

204: Send the transmission frame.

It should be noted that the transmission frame mapping method provided in this application may adapt to a plurality of different service bearers, for example, a constant bit rate (Constant Bit Rate, CBR) bearer or a packet (Packet, PKT) bearer. For the CBR bearer, rate match is implemented by inserting a rate compensation (Rate Compensation, RC) block into a code block stream. For the PKT bearer, rate match is performed on a code block stream by adding/deleting an idle code block.

The following describes a specific application scenario of a transmission frame mapping method.

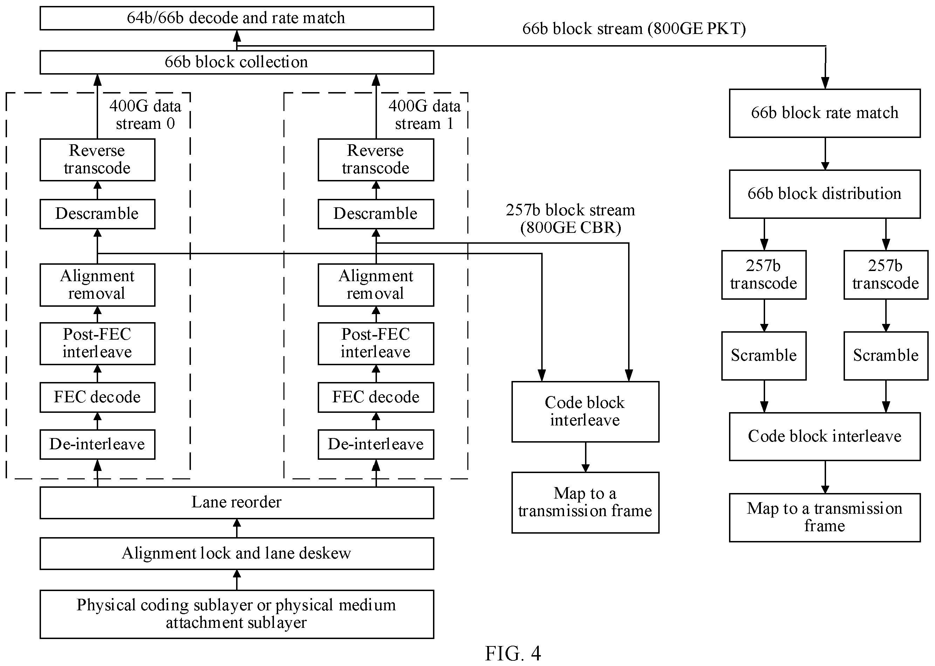

FIG. 4 is a schematic diagram of an application scenario of a transmission frame mapping method according to an embodiment of this application. As shown in FIG. 4, for example, a rate of a service is 800 GE, and a PCS or a PMA processes a data stream from a client side. Then, alignment lock (Alignment Lock) and lane deskew (Lane Deskew) are performed to obtain a plurality of aligned lane data streams, for example, 32 aligned lane data streams. Further, lane reorder (lane reorder) is performed, so that the plurality of lane data streams are arranged in a specified order. The plurality of lane data streams that are obtained through lane reorder may be divided into two 400G data streams, which are respectively denoted as a 400G data stream 0 and a 400G data stream 1. For example, the 400G data stream 0 includes a lane data stream 0 to a lane data stream 15, and the 400G data stream 1 includes a lane data stream 16 to a lane data stream 31. Specifically, de-interleave (De-interleave), forward error correction (Forward Error Correction, FEC) decode, post-FEC interleave (Post-FEC interleave), alignment removal (Alignment Removal), descramble (Descramble), and reverse transcode (Reverse Transcode) are sequentially performed on each 400G data stream. Next, 66b block collection (66b Block Collection) is performed on the two 400G data streams to obtain a 66b block stream. Further, 64b/66b decode and rate match (64b/66b Decode and Rate Match) are performed on the 66b block stream.

In the scenario shown in FIG. 4, for a CBR bearer, two 257b block streams may be obtained after the alignment removal operation on the two 400G data streams is completed. Further, interleaving is first performed on the two 257b block streams, and then a 257b block stream obtained through interleaving is mapped to a transmission frame. It should be understood that, in this implementation, after the alignment removal, other subsequent operations such as descramble and reverse transcode do not need to be performed.

In the scenario shown in FIG. 4, for a PKT bearer, two 66b block streams are obtained after reverse transcode is performed on two 257b block streams, and one 66b block stream is obtained by performing 66b block collection on the two 66b block streams. Next, rate match is first performed on the 66b block stream, and then block distribution is performed to obtain two 66b block streams. Then, 257b transcode is performed on the two 66b block streams to obtain two 257b block streams, and then scramble is performed on the two 257b block streams. The two 257b block streams are synchronized during transcode and scramble processing, that is, a same processing pace is maintained, in other words, same processing time is maintained. Further, interleaving is first performed on the two 257b block streams, and then a 257b block stream obtained through interleaving is mapped to a transmission frame. It should be understood that, in this implementation, a 64b/66b decode operation does not need to be performed after the 66b block collection.

In a possible implementation, for the PKT bearer, distribution may not be performed after rate match is performed on the 66b block stream, the 66b block stream is transcoded into a 257b block stream instead. Further, the 257b block stream is first scrambled, and then mapped to the transmission frame. In other words, considering that a 66b block stream is obtained through 66b block collection, the 66b block stream may alternatively be transcoded into a 257b block stream, and then mapped to the transmission frame, and an operation of interleaving a plurality of 257b block streams does not need to be performed.

It should be noted that, in the scenario shown in FIG. 4, for a specific implementation of interleaving and mapping, refer to the foregoing related descriptions of the embodiment shown in FIG. 2. Details are not described herein again.

The following describes a plurality of possible structures of the transmission frame in this application.

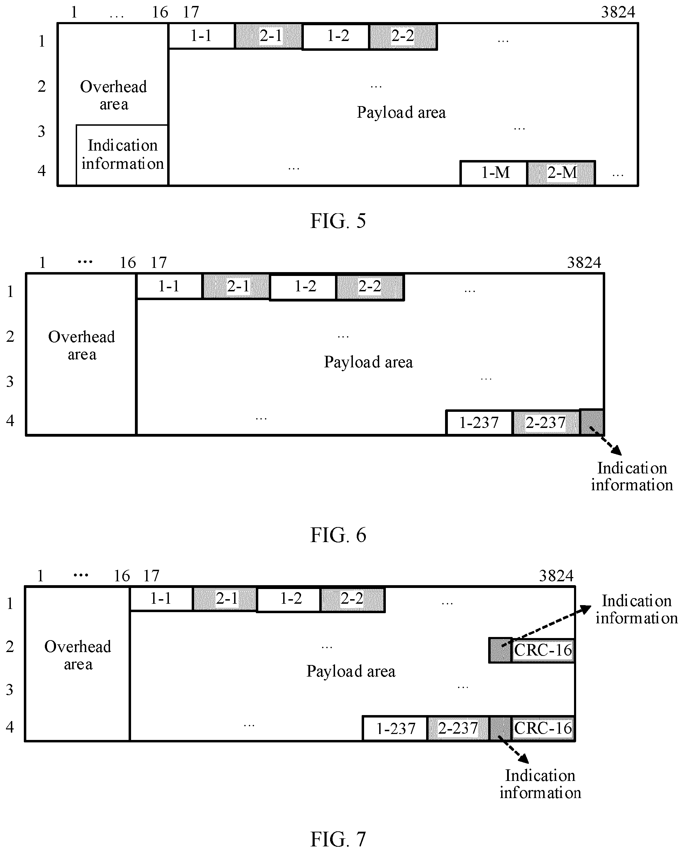

FIG. 5 is a first schematic structural diagram of a transmission frame according to an embodiment of this application. As shown in FIG. 5, a code block in a second code block stream is mapped to a payload area of the transmission frame, and indication information is inserted into an overhead area of the transmission frame. It can be learned that code blocks in the second code block stream are sequentially mapped to the payload area of the transmission frame row by row. For example, code block-based interleaving is performed on two first code block streams, and every two consecutive code blocks in any row of the payload area are from the two first code block streams respectively. It should be understood that the indication information inserted into the overhead area may also be referred to as a "block boundary indication (block boundary Indication)", and a location or a boundary of a code block in the payload area may be directly determined based on the indication information. It should be noted that, in the transmission frame structure shown in FIG. 5, the entire payload area is used to carry the code block in the second code block stream. If the payload area cannot exactly carry an integer quantity of code blocks, remaining space of the payload area may carry a part of bits in one code block, and the other part of the code block is mapped to a next transmission frame. For example, the payload area shown in FIG. 5 can carry 474 257b blocks, and the remaining space of the payload area may further carry 38 bits of one 257b block.

In a possible implementation, the indication information may be inserted into a 15^{th} column and a 16^{th} column of a 1^{st} row to a 3^{rd} row, or a 15^{th} column and a 16^{th} column of a 4^{th} row in the overhead area. In an example, the indication information includes nine bits, high-order five bits of the indication information are inserted into the 16^{th} column of the 1^{st} row in the overhead area, and low-order four bits of the indication information are inserted into a 16^{th} column of a 2^{nd} row in the overhead area. In another example, the indication information may be implemented by using a 9-bit overhead multiframe indicator (overhead multiframe indicator, OMFI), and the 9-bit indication information is located at low-order one bit in the 15^{th} column and eight bits in the 16^{th} column of the 4^{th} row in the overhead area.

FIG. 6 is a second schematic structural diagram of a transmission frame according to an embodiment of this application. As shown in FIG. 6, a code block in a second code block stream is mapped to a payload area of a transmission frame, and indication information is inserted into the payload area of the transmission frame. It should be understood that the indication information inserted into the overhead area may also be referred to as "fixed padding". A quantity of code blocks carried in the payload area is an integer. For example, interleaving is first performed on two 257b block streams and then mapping is performed. 237 257b blocks in each 257b block stream are mapped to the payload area, that is, the payload area carries 474 257b blocks. Therefore, 38-bit indication information may be inserted into a tail of the payload area. It should be noted that, because the payload area carries an integer quantity of code blocks, and the fixed-bit indication information is inserted into the payload area, a location of a code block may be indirectly determined based on determining a frame boundary and with reference to an insertion location of the indication information. It should be further understood that a specific form of the indication information is not limited in this application. For example, the 38-bit indication information may all be 0.

FIG. 7 is a third schematic structural diagram of a transmission frame according to an embodiment of this application. As shown in FIG. 7, a code block in a second code block stream is mapped to a payload area of a transmission frame, and indication information is inserted into the payload area of the transmission frame. Different from the transmission frame structure shown in FIG. 6, the payload area of the transmission frame shown in FIG. 7 further carries check information. The check information may be used to protect valid data carried in the payload area, to improve transmission reliability. For example, the check information may specifically be cyclic redundancy check-16 (Cyclic Redundancy Check, CRC-16) shown in FIG. 7. A quantity of code blocks carried in the payload area is an integer. For example, two 257b block streams are first interleaved and then mapped. 237 257b blocks in each 257b block stream are mapped to the payload area, that is, the payload area carries 474 257b blocks. Specifically, the 257b blocks carried in the 1st row and the 2nd row in the payload area are checked to obtain a CRC-16 located at the tail of the 2nd row, and the 257b blocks carried in the 3rd row and the 4th row in the payload area are checked to obtain a CRC-16 located at the tail of the 4th row. In addition, indication information of three bits is inserted next to the CRC-16 at the tail of the 2nd row, and indication information of three bits is inserted next to the CRC-16 at the tail of the 4th row.

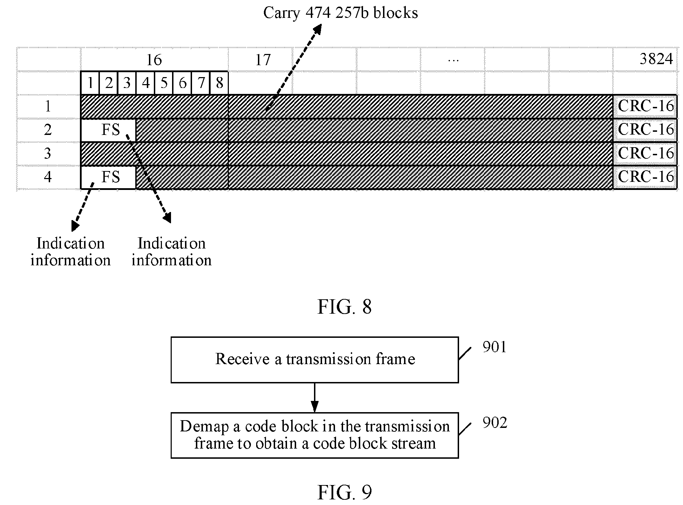

FIG. 8 is a fourth schematic structural diagram of a transmission frame according to an embodiment of this application. As shown in FIG. 8, a code block in the second code block stream is mapped to the payload area and the overhead area of the transmission frame, and the indication information is inserted into the overhead area of the transmission frame. A quantity of code blocks carried in the payload area and a quantity of code blocks carried in the overhead area are integers. For example, two 257b block streams are first interleaved and then mapped. 237 257b blocks in each 257b block stream are mapped to the payload area and the overhead area, that is, the payload area and the overhead area carry 474 257b blocks. Specifically, FIG. 8 is used as an example. A 16^{th} column of the overhead area may be used to carry a 257b block. High three bits in the 16^{th} column of the 2nd row and the 4th row in the overhead area carry the indication information, and a diagonal area shown in FIG. 8 may carry exactly 474 257b blocks. In addition, the payload area further carries check information. For example, a code block carried in each row in an overhead area and the payload area is checked to obtain corresponding CRC-16. The CRC-16 is located at a tail of each row. It should be understood that, compared with frame-based checking in the embodiment shown in FIG. 7, in the embodiment shown in FIG. 8, a code block in each row is checked to reduce cache and latency. Further, because the CRC-16 is inserted into the tail of each row, space of the payload area is insufficient to carry 474 257b blocks. Therefore, a 16^{th} column of the overhead area is borrowed to jointly carry the 257b block.

It can be learned from the foregoing descriptions that, in this application, code block-based interleaving is performed sequentially on a plurality of code block streams, and a code block stream obtained through interleaving is mapped to the transmission frame. Compared with a manner in which the code block streams are respectively mapped, a solution provided in this application simplifies the mapping manner. In addition, a 257b block stream is used in this application. Different from a 66b block stream, the 257b block stream has higher carrying efficiency. In addition, first two bits in a 66b code block are synchronization headers, that is, each 66b code block needs to be subject to synchronous processing. Processing complexity is high. However, in this application, the indication information is inserted into the transmission frame, and the location of the code block in the transmission frame can be determined based on the indication information, so that the location of the code block can be quickly identified when the transmission frame is demapped. This avoids complex synchronous processing on code blocks.

FIG. 9 is a schematic diagram of an embodiment of a transmission frame demapping method according to an embodiment of this application. In this example, the transmission frame demapping method includes the following steps.

901: Receive a transmission frame.

In this embodiment, for a transmission frame structure, refer to related descriptions in the embodiment shown in FIG. 2. Details are not described herein again.

902: Demap a code block in the transmission frame to obtain a code block stream.

It should be understood that demapping the transmission frame is an inverse operation of mapping the code block stream in the embodiment shown in FIG. 2. Further, the code block stream obtained through demapping is distributed to obtain a plurality of code block streams, that is, obtain a plurality of code block streams before interleaving in the embodiment shown in FIG. 2.

The following describes a specific application scenario of a transmission frame demapping method.

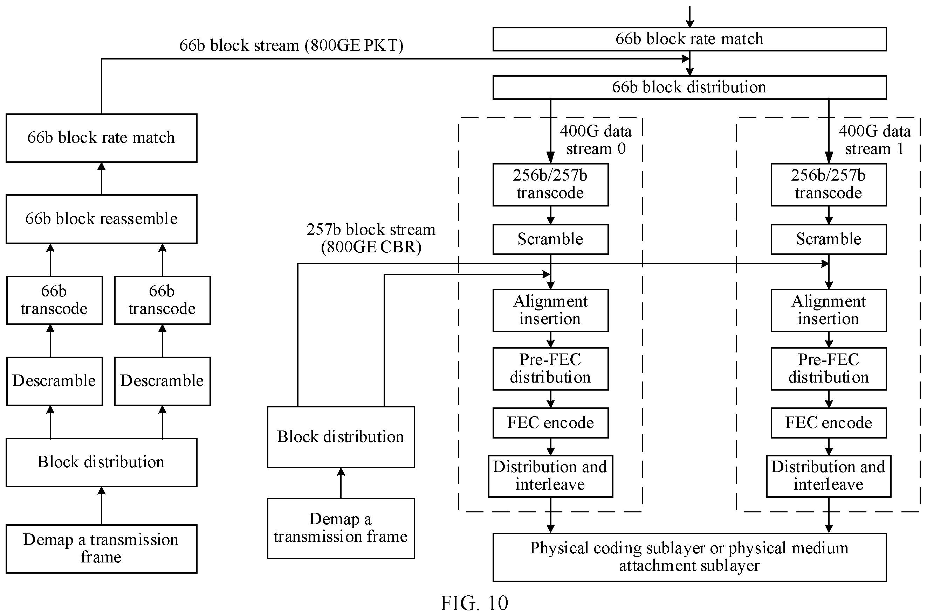

FIG. 10 is a schematic diagram of an application scenario of a transmission frame demapping method according to an embodiment of this application. As shown in FIG. 10, for example, a rate of a service is 800 GE. 66b block rate match (66b Block Rate Match) is performed on data to obtain a 66b block stream. Then, 66b block distribution (66b Block Distribution) is performed on the 66b block stream to obtain two 400G data streams, which are respectively denoted as a 400G data stream 0 and a 400G data stream 1. Specifically, 256b/257b transcode (256b/257b Transcode), scramble (Scramble), alignment insertion (Alignment Insertion), pre-FEC distribution (Pre-FEC Distribution), FEC encode (FEC Encode), and distribution and interleave (Distribution and Interleave) are sequentially performed on each 400G data stream. Further, the two 400G data streams are transmitted to a client side through a PCS or a PMA.

In the scenario shown in FIG. 10, for a CBR bearer, a transmission frame is first demapped, and then the block distribution is performed to obtain two 257b block streams. Further, the alignment insertion, the pre-FEC distribution, the FEC encode, and the distribution and interleave are sequentially performed on each 257b block stream.

In the scenario shown in FIG. 10, for a PKT bearer, a transmission frame is first demapped, and then the block distribution is performed to obtain two 257b block streams. Next, descramble and 66b transcode are performed on both of the two 257b block streams to obtain two 66b block streams. Then, 66b code block collection is performed on the two 66b block streams to obtain a 66b block stream, and then rate match is performed on the 66b block stream. Then, 66b block distribution is performed on a rate-matched 66b block stream to obtain two 66b block streams. Further, the 256b/257b transcode, the scramble, the alignment insertion, the pre-FEC distribution, the FEC encode, and the distribution and interleave are sequentially performed on each 66b block stream.

In a possible implementation, for the PKT bearer, the block distribution may alternatively not be performed on a demapped transmission frame, but descramble and 66b transcode are performed on the 257b block stream obtained through demapping, to obtain a 66b block stream. Further, an operation such as rate match is performed on the 66b block stream. Details are not described herein again. In other words, if interleaving is not performed before mapping, the block distribution may alternatively not be performed after demapping.

It should be noted that an embodiment of this application further provides another transmission frame mapping method. The following describes the method in detail.

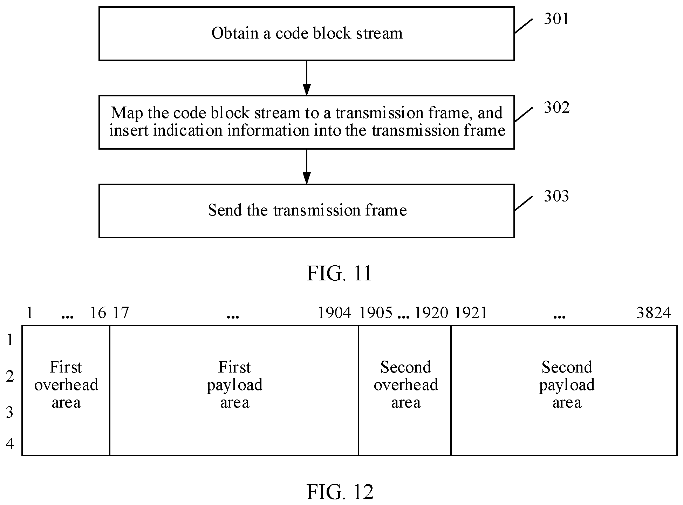

FIG. 11 is a schematic diagram of an embodiment of another transmission frame mapping method according to an embodiment of this application. In this example, the transmission frame mapping method includes the following steps.

301: Obtain a code block stream.

In this embodiment, the code block stream includes a plurality of code blocks. In an example, a size of the code block in the code block stream is 66 bits, and the code block stream may be referred to as a "66b block stream" or a "66B block stream". In another example, a size of the code block in the code block stream is 257 bits, and the code block stream may be referred to as a "257b block stream" or a "257B block stream".

302: Map the code block stream to a transmission frame, and insert indication information into the transmission frame.

FIG. 12 is a fifth schematic structural diagram of a transmission frame according to an embodiment of this application. As shown in FIG. 12, the transmission frame sequentially includes, starting from a start location, a first overhead area, a first payload area, a second overhead area, and a second payload area. In a possible implementation, the transmission frame includes four rows and 3824 columns of bytes. An area from a 1^{st} column to a 16^{th} column in the transmission frame is the first overhead area, an area from a 17^{th} column to a 1904^{th} column in the transmission frame is the first payload area, an area from a 1905^{th} column to a 1920^{th} column in the transmission frame is the second overhead area, and an area from a 1921^{st} column to a 3824^{th} column in the transmission frame is the second payload area. Code blocks in the code block stream are sequentially mapped to the first payload area and the second payload area row by row. In other words, the code block stream is sequentially mapped to a 1^{st} row of the first payload area, a 1^{st} row of the second payload area, a 2^{nd} row of the first payload area, a 2^{nd} row of the second payload area, a 3^{rd} row of the first payload area, a 3^{rd} row of the second payload area, a 4^{th} row of the first payload area, and a 4^{th} row of the second payload area.

It should be understood that the indication information is used to determine a location of a code block mapped to the transmission frame. For example, the indication information may be inserted into an overhead area of the transmission frame. For another example, the indication information may alternatively be inserted into a payload area of the transmission frame. Details are separately described below with reference to specific embodiments.

It should be noted that a frame mapping manner used in this application may be a bit-synchronous mapping procedure (Bit-synchronous mapping procedure, BMP), a generic mapping procedure (Generic Mapping Procedure, GMP), an idle mapping procedure (Idle mapping Procedure, IMP), a generic framing procedure (Generic Framing Procedure, GFP), or the like. This is not specifically limited herein.

303: Send the transmission frame.

The following describes specific structures of several transmission frames with reference to a specific manner of carrying the indication information.

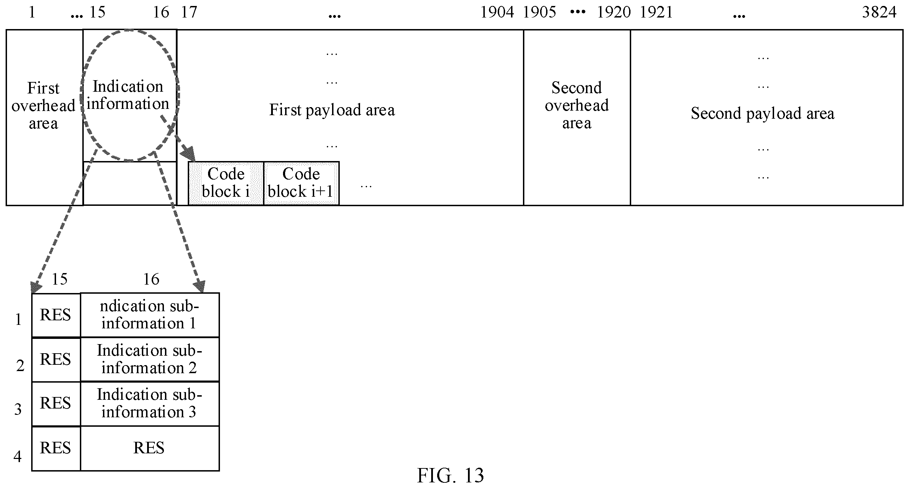

FIG. 13 is a sixth schematic structural diagram of a transmission frame according to an embodiment of this application. The indication information may be inserted into the first overhead area and/or the second overhead area. In FIG. 13, an example in which the indication information is inserted into the first overhead area is used for presentation. A location or a boundary of a code block may be directly determined based on the indication information. In a possible implementation, the size of the code block in the code block stream is 66 bits, and the indication information may be inserted into a 15^{th} column and/or a 16^{th} column of a 1^{st} row to a 3^{rd} row in the first overhead area. A value range of the indication information may be 0 to 32, and respectively indicating 33 possible start locations of a code block i in the transmission frame. The code block i may be a preset code block. For example, the code block i is a 1^{st} complete code block in a 4^{th} row in the first payload area. Determining a start location of the code block i is equivalent to determining a location of each of other code blocks in the transmission frame.

In a possible scenario, the indication information includes three pieces of indication sub-information, and the three pieces of indication sub-information have a same value. In other words, all the three pieces of indication sub-information indicate the start location of the code block i. A receiving end may receive the three pieces of indication sub-information. Even if a transmission error occurs in one piece of indication sub-information, valid indication sub-information may be determined through majority voting, so that an accurate start location of the code block i can be determined. In an example, as shown in FIG. 13, the three pieces of indication sub-information are inserted into the 16^{th} column of the 1^{st} row to the 3^{rd} row in the first overhead area. In another example, the three pieces of indication sub-information are inserted into the 15^{th} column of the 1^{st} row to the 3^{rd} row in the first overhead area. In still another example, the three pieces of indication sub-information are inserted into the 15^{th} column to the 16^{th} column of the 1^{st} row to the 3^{rd} row in the first overhead area.

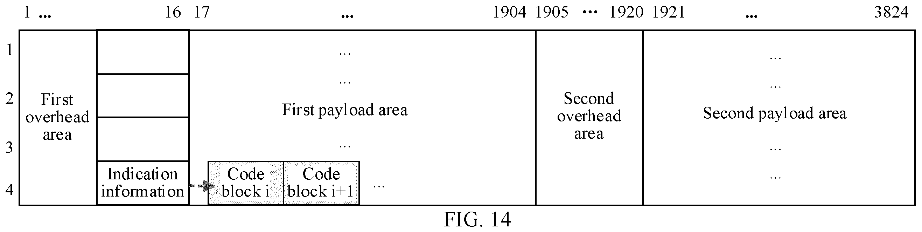

FIG. 14 is a seventh schematic structural diagram of a transmission frame according to an embodiment of this application. The indication information may be inserted into the first overhead area and/or the second overhead area. In FIG. 14, an example in which the indication information is inserted into the first overhead area is used for presentation. In a possible implementation, the size of the code block in the code block stream is 66 bits, every N consecutive transmission frames form a group, and values of N pieces of indication information in N transmission frames of each group increase in ascending order. In addition, values of N pieces of indication information of N transmission frames in any group are the same as values of N pieces of indication information of N transmission frames in any other group. In an example, N=11, the code block stream is sequentially mapped to a plurality of transmission frames, and locations of code blocks of every 11 transmission frames in the transmission frame are the same. For example, a code block i is a 1^{st} complete code block in a 1^{st} row or a 1^{st} complete code block in a 4^{th} row in the first payload area. A start location of the code block i in a 1^{st} transmission frame is the same as a start location of the code block i in a 12^{th} transmission frame, a start location of the code block i in a 2^{nd} transmission frame is the same as a start location of the code block i in a 13^{th} transmission frame, and so on. Therefore, that the indication information may indicate a start location of the code block i is equivalent to that a location of each of other code blocks in the transmission frame is determined.

In a possible scenario, FIG. 14 is used as an example. The indication information may be inserted into a 16^{th} column of a 4^{th} row in the first overhead area. It should be understood that if N=11, the indication information has 11 values in total, respectively indicating 11 possible start locations of the code block i in different transmission frames.

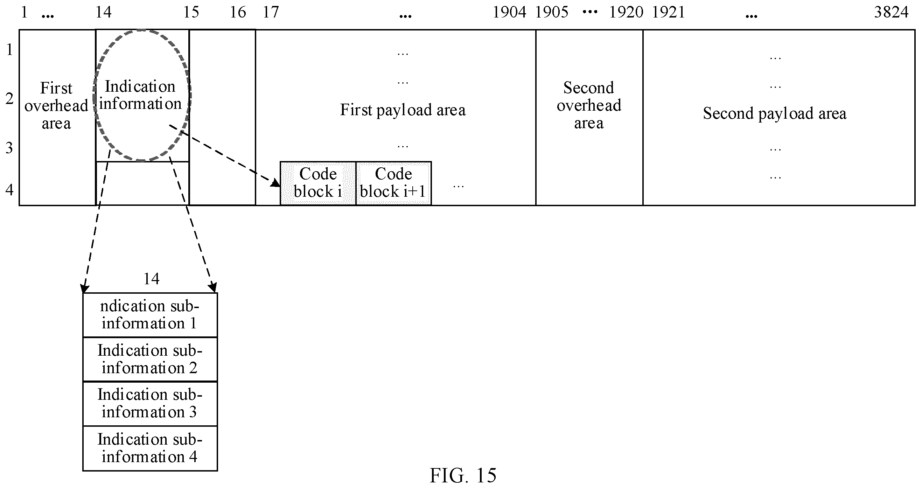

FIG. 15 is an eighth schematic structural diagram of a transmission frame according to an embodiment of this application. As shown in FIG. 15, in another possible scenario, the indication information includes four pieces of indication sub-information, and values of the four pieces of indication sub-information increase in ascending order. The four pieces of indication sub-information are sequentially inserted into a 1^{st} to a 4^{th} row in a first overhead area or a 1^{st} row to a 4^{th} row in a second overhead area in ascending order. In an example, as shown in FIG. 15, the four pieces of indication sub-information are sequentially inserted into a 14^{th} column of the 1^{st} row to the 4^{th} row in the first overhead area. Specifically, the indication information may be in a multiframe indication manner, and each piece of indication sub-information includes six bits. High-order four bits of the four pieces of indication sub-information in each transmission frame are the same, and low-order two bits of the four pieces of indication sub-information in each transmission frame increase in ascending order. For example, a value of indication sub-information 1 is xxxx00, a value of indication sub-information 2 is xxxx01, a value of indication sub-information 3 is xxxx10, and a value of indication sub-information 4 is xxxx11. On this basis, high-order four bits of the indication sub-information increase in ascending order based on the transmission frame. For example, a value of high-order four bits of indication sub-information in a 1^{st} transmission frame is 0, a value of high-order four bits of indication sub-information in a 2^{nd} transmission frame is 1, ..., and a value of high-order four bits of indication sub-information in an 11^{th} transmission frame is 10. Therefore, the indication information has 44 values in total.

In an example, the following Table 1 and Table 2 provide a correspondence between the value of the high-order four bits of the indication sub-information and the start location of the code block i. The code block i in Table 1 is a 1^{st} complete code block in a 4^{th} row in a current transmission frame, and the code block i in Table 2 is a 1^{st} complete code block in a 1^{st} row in a next transmission frame. For example, as shown in Table 1, when a value of high-order four bits of indication sub-information in the current transmission frame is 0, a start location of the code block i is a 31^{st} bit in the 4^{th} row in the current transmission frame. For example, as shown in Table 2, when a value of high-order four bits of indication sub-information in the current transmission frame is 0, a start location of the code block i is a 1^{st} bit in the 1^{st} row in the next transmission frame.

**Table 1**

| Value of high-order four bits of indication sub-information of a current transmission frame | Start location of a code block i in a first payload area of the current transmission frame |
|---|---|
| 0 | 31 |
| 1 | 61 |
| 2 | 25 |
| 3 | 55 |
| 4 | 19 |
| 5 | 49 |
| 6 | 13 |
| 7 | 43 |
| 8 | 7 |
| 9 | 37 |
| 10 | 1 |

**Table 2**

| Value of high-order four bits of indication sub-information of a current transmission frame | Start location of a code block i in a first payload area of a next transmission frame |
|---|---|
| 0 | 1 |
| 1 | 31 |
| 2 | 61 |
| 3 | 25 |
| 4 | 55 |
| 5 | 19 |
| 6 | 49 |
| 7 | 13 |
| 8 | 43 |
| 9 | 7 |
| 10 | 37 |

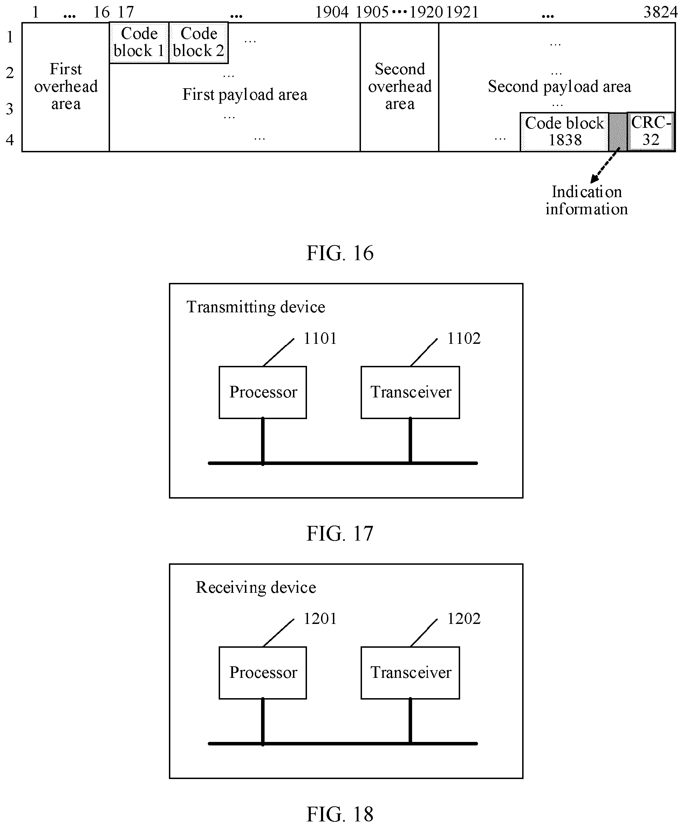

FIG. 16 is a ninth schematic structural diagram of a transmission frame according to an embodiment of this application. As shown in FIG. 16, the indication information is inserted into the second payload area, and the indication information may also be referred to as "fixed padding". A quantity of code blocks carried in the first payload area and a quantity of code blocks carried in the second payload area are integers. FIG. 16 is used as an example. The first payload area and the second payload area carry 1838 66b code blocks. A tail of the second payload area may further have 36 remaining bits for inserting the indication information. For example, the indication information may all be 0 or 1. It should be noted that, because the first payload area and the second payload area carry an integer quantity of code blocks, and the indication information of fixed bits is inserted into the second payload area, a location of a code block may be indirectly determined based on determining a frame boundary and with reference to an insertion location of the indication information.

In a possible implementation, as shown in FIG. 16, the second payload area further carries check information. For example, the check information may specifically be cyclic redundancy check-32 (Cyclic Redundancy Check, CRC-32). The CRC-32 that occupies 32 bits may be obtained by checking the code blocks carried in the first payload area and the second payload area. Therefore, four bits of indication information may be further inserted next to the CRC-32 at the tail of the second payload area.

It can be learned from the descriptions of the embodiment shown in FIG. 11 that this application provides a new transmission frame structure. The transmission frame sequentially includes, starting from a start location, a first overhead area, a first payload area, a second overhead area, and a second payload area. This is equivalent to extending the overhead area, to accelerate a transmission rate of overhead information, and improve performance. In addition, the indication information is inserted into the transmission frame, and the location of the code block in the transmission frame may be determined based on the indication information. In this way, the location of the code block can be quickly identified when the transmission frame is demapped, to avoid complex synchronous processing on the code blocks.

Based on the embodiment shown in FIG. 11, this application further provides a transmission frame demapping method. The transmission frame demapping method is similar to the method steps in the embodiment shown in FIG. 9. Specifically, a transmission frame from a transmitting end is received first. For a transmission frame structure, refer to related descriptions in the embodiment shown in FIG. 11. Details are not described herein again. Further, a code block in the transmission frame is demapped to obtain a code block stream. It should be understood that demapping the transmission frame is an inverse operation of mapping the code block stream in the embodiment shown in FIG. 11. Details are not described herein again.

FIG. 17 is a possible schematic structural diagram of a transmitting device. As shown in FIG. 17, the transmitting device includes a processor 1101 and a transceiver 1102. Specifically, the processor 1101 is configured to perform step 201 and step 203 in the embodiment shown in FIG. 2. The transceiver 1102 is configured to perform step 204 in the embodiment shown in FIG. 2. Alternatively, the processor 1101 is configured to perform step 301 and step 302 in the embodiment shown in FIG. 11. The transceiver 1102 is configured to perform step 303 in the embodiment shown in FIG. 11.

FIG. 18 is a possible schematic structural diagram of a receiving device. As shown in FIG. 18, the receiving device includes a processor 1201 and a transceiver 1202. Specifically, the transceiver 1202 is configured to perform step 901 in the embodiment shown in FIG. 9. The processor 1201 is configured to perform step 902 in the embodiment shown in FIG. 9.

An embodiment of this application further provides a digital processing chip. The digital processing chip integrates a circuit configured to implement a function of the processor 1101 or the processor 1201 and one or more interfaces. When a memory is integrated into the digital processing chip, the digital processing chip may implement the method steps in any one or more embodiments in the foregoing embodiments. When no memory is integrated into the digital processing chip, the digital processing chip may be connected to an external memory through an interface. The digital processing chip implements, based on program code stored in the external memory, an action executed by an optical transmission device in the foregoing embodiment.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A transmission frame mapping method, comprising:
obtaining a plurality of first code block streams, wherein the plurality of first code block streams belong to a same service, and each of the plurality of first code block streams comprises a plurality of code blocks;
performing code block-based interleaving on the plurality of first code block streams, to obtain a second code block stream;
mapping the second code block stream to a transmission frame, and inserting indication information into the transmission frame, wherein the indication information has a fixed quantity of bits, and a quantity of code blocks carried in the transmission frame is an integer; and
sending the transmission frame.

2. The method according to claim 1, wherein a size of the code block in the first code block stream is 257 bits.

3. The method according to claim 1 or 2, wherein inserting the indication information into the transmission frame comprises:
inserting the indication information into a payload area of the transmission frame, wherein a quantity of code blocks carried in the payload area is an integer.

4. The method according to claim 3, wherein the transmission frame is an OPU frame, a size of the indication information is 38 bits, and the payload area carries 474 257-bit code blocks.

5. The method according to any one of claims 1 to 4, wherein the method further comprises:
checking the code block in the transmission frame to obtain check information, and inserting the check information into the payload area.

6. The method according to claim 5, wherein
the checking the code block in the transmission frame to obtain check information comprises:
checking the code block carried in the payload area to obtain 32-bit CRC-32.

7. The method according to any one of claims 1 to 6, wherein the method further comprises:
performing synchronous processing on the plurality of first code block streams.

8. The method according to any one of claims 1 to 7, wherein the mapping the second code block stream to a transmission frame comprises:
mapping the second code block stream to the transmission frame by using a bit-synchronous mapping procedure BMP.

9. The method according to any one of claims 1 to 8, wherein a rate of the service is 800 GE or 1.6 TE.

10. A transmission frame mapping method, comprising:
obtaining a code block stream, wherein the code block stream comprises a plurality of code blocks;
mapping the code block stream to a transmission frame, and inserting indication information into the transmission frame, wherein the indication information is used to determine a code block start location of the code block stream in the transmission frame, and the transmission frame sequentially comprises a first overhead area, a first payload area, a second overhead area, and a second payload area; and
sending the transmission frame.

11. The method according to claim 10, wherein a size of the code block in the code block stream is 66 bits or 257 bits.

12. The method according to claim 11, wherein the code block start location is a location of a 1^{st} 66-bit code block of a 1^{st} row in the first payload area.

13. The method according to any one of claims 10 to 12, wherein N subframes in the transmission frame form a group, the indication information has N values, the N values respectively indicate code block start locations in the N subframes, and N is an integer greater than 0.

14. The method according to any one of claims 10 to 12, wherein the transmission frame comprises a first group of transmission frames and a second group of transmission frames, both the first group of transmission frames and the second group of transmission frames comprise N subframes, a code block start location of an i^{th} subframe in the first group of transmission frames is the same as a code block start location of an i^{th} subframe in the second group of transmission frames, and both N and i are integers greater than 0.

15. The method according to claim 13 or 14, wherein N is 11.

16. The method according to any one of claims 13 to 15, wherein the N values of the indication information increase in ascending order.

17. The method according to any one of claims 10 to 16, wherein the indication information is an overhead multiframe indicator OMFI.

18. The method according to any one of claims 10 to 17, wherein the transmission frame comprises four rows and 3824 columns of bytes, an area from a 1^{st} column to a 16^{th} column in the transmission frame is the first overhead area, an area from a 17^{th} column to a 1904^{th} column in the transmission frame is the first payload area, an area from a 1905^{th} column to a 1920^{th} column in the transmission frame is the second overhead area, and an area from a 1921^{st} column to a 3824^{th} column in the transmission frame is the second payload area.

19. The method according to any one of claims 10 to 18, wherein the inserting indication information into the transmission frame comprises:
inserting the indication information into the first overhead area and/or the second overhead area.

20. The method according to claim 19, wherein the inserting the indication information into the first overhead area comprises: inserting the indication information into the 16^{th} column in the first overhead area.

21. The method according to any one of claims 10 to 20, wherein the inserting indication information into the transmission frame comprises:
a quantity of code blocks carried in the first payload area and a quantity of code blocks carried in the second payload area are integers.

22. A transmission frame demapping method, comprising:
receiving a transmission frame, wherein the transmission frame carries a second code block stream and indication information, the indication information has a fixed quantity of bits, a quantity of code blocks carried in the transmission frame is an integer, the second code block stream is obtained by performing code block-based interleaving on a plurality of first code block streams, the plurality of first code block streams belong to a same service, and each of the plurality of first code block streams comprises a plurality of code blocks; and
demapping the code block in the transmission frame to obtain the second code block stream.

23. The method according to claim 22, wherein the method further comprises:
distributing the second code block stream to obtain the plurality of first code block streams.

24. A transmission frame demapping method, comprising:
receiving a transmission frame, wherein the transmission frame carries a code block stream and indication information, the code block stream comprises a plurality of code blocks, the indication information is used to determine a code block start location of the code block stream in the transmission frame, and the transmission frame sequentially comprises a first overhead area, a first payload area, a second overhead area, and a second payload area; and
demapping the code blocks in the transmission frame based on the indication information, to obtain the code block stream.

25. A transmitting device, comprising a processor and a transceiver, wherein the processor is configured to control the transceiver to receive and send a signal, and the processor is configured to perform the method according to any one of claims 1 to 9.

26. A receiving device, comprising a processor and a transceiver, wherein the processor is configured to control the transceiver to receive and send a signal, and the processor is configured to perform the method according to any one of claims 1 to 9.

27. A transmitting device, comprising a processor and a transceiver, wherein the processor is configured to control the transceiver to receive and send a signal, and the processor is configured to perform the method according to any one of claims 10 to 21.

28. A receiving device, comprising a processor and a transceiver, wherein the processor is configured to control the transceiver to receive and send a signal, and the processor is configured to perform the method according to any one of claims 10 to 21.

29. A digital processing chip, wherein the chip comprises a processor and a memory, the memory and the processor are interconnected through a line, the memory stores instructions, and the processor is configured to perform the method according to any one of claims 1 to 9.

30. A digital processing chip, wherein the chip comprises a processor and a memory, the memory and the processor are interconnected through a line, the memory stores instructions, and the processor is configured to perform the method according to any one of claims 10 to 21.
